# EUROPÄISCHE PATENTSCHRIFT

(11) **EP 1 142 755 B1**
(45) Veröffentlichungstag und Bekanntmachung des Hinweises auf die Patenterteilung: **23.11.2005**
(21) Anmeldenummer: 01107121.4
(22) Anmeldetag: 22.03.2001
(51) Int. Cl.: B60P 1/64, B60P 1/00, B65D 88/30, B65D 90/14

(54) **Mobiler Vorratsbehälter sowie Transportfahrzeug für einen solchen Behälter und Verfahren zu dessen Aufstellung**
Mobile storage container, transport vehicle and handling method for such a container
Réservoir de stockage mobile, véhicule de transport et procédé de manutention pour un tel réservoir

(30) Priorität: 04.04.2000 DE 10016757
(43) Veröffentlichungstag der Anmeldung: 10.10.2001
(73) Patentinhaber: Posch, Jürgen, 73035 Göppingen (DE)
(72) Erfinder: Posch, Jürgen, 73035 Göppingen (DE)
(74) Vertreter: Riedel, Peter

(56) Entgegenhaltungen:
- DE-A- 19 506 424
- FR-A- 2 534 201
- US-A- 4 465 420
- US-A- 4 621 972

## Beschreibung

Die Erfindung betrifft einen mobilen Vorratsbehälter mit den Merkmalen nach dem Oberbegriff des Anspruchs 1, ein Transportfahrzeug für einen mobilen Vorratsbehälter mit den Merkmalen nach dem Oberbegriff des Anspruchs 14 sowie ein Verfahren zum Aufstellen eines mobilen Vorratsbehälters.

Insbesondere an Großbaustellen mit einem hohen Bedarf an Baumaterialien wie Beton, Mörtel, Putz oder dgl. wird wegen des steigenden Kostendruckes die Herstellung dieser Baumaterialien zunehmend an der Baustelle selbst vorgenommen. Dazu werden mobile Vorratsbehälter wie Zementsilos oder dgl. mittels Sattelzügen oder anderen geeigneten Transportfahrzeugen zur Baustelle gefahren und dort aufgestellt. Die Vorratsbehälter werden dabei im gefüllten Zustand angeliefert und nach Verbrauch des Füllgutes durch einen gefüllten Vorratsbehälter ersetzt.

Die Größe und damit die Wirtschaftlichkeit solcher Vorratsbehälter ist durch die einschlägigen Zulassungsvorschriften für den Straßentransport beschränkt. Insbesondere darf das zulässige Gesamtgewicht der Einheit aus dem Transportfahrzeug, dem Vorratsbehälter und dem darin enthaltenen Füllgut nicht überschritten werden. Dies bedingt ein häufiges Auswechseln der Vorratsbehälter, wodurch deren wirtschaftlich nutzbare Aufstellzeit an der Baustelle gering ist. Ein Verbleiben eines solchen Vorratsbehälters an der Baustelle zum bedarfsweisen Nachfüllen von einem entsprechenden Lastaufgenommen werden. Für eine statisch bestimmte Aufstellung sind mindestens drei solcher Stützbeine erforderlich. In einer bevorzugten Ausbildung sind insgesamt vier Stützbeine mit je einem Stützfuß vorgesehen, wobei insbesondere je zwei Stützbeine paarweise in einer Ebene liegen, innerhalb derer die jeweiligen Stützfüße ausfahrbar sind. Dadurch ist eine einfache Ausbildung des Ausfahrmechanismus insbesondere durch Anordnung von Hydraulikzylindern zum Ausfahren der Stützfüße ermöglicht. In einer vorteilhaften Ausbildung weisen dabei die Stützfüße Mittel zur Befestigung an einem Fundament auf, die bei entsprechend hohen Windlasten ein Abheben der Stützfüße vom Fundament und damit ein Umkippen des Vorratsbehälters zuverlässig verhindern.

Eine konstruktiv einfache Lösung in Verbindung mit einer hohen Tragfähigkeit ergibt sich aus der Anordnung von horizontalen, senkrecht zur Längsachse des Vorratsbehälters liegenden Führungsrohren, in denen Tragarme mit daran befestigten Stützfüßen linear beweglich nach Art eines Teleskopes geführt sind. Für die Versorgung der zum Ausfahren der Stützbeine vorgesehenen Hydraulikzylinder kann eine hydraulische Anschlusseinrichtung vorgesehen sein, mittels derer die Hydraulikzylinder des Vorratsbehälters an eine Hydraulikanlage des Transportfahrzeuges anschließbar sind. Transportfahrzeuge von geeigneter Größenordnung weisen üblicherweise serienmäßig eine solche Hydraulikanlage auf, so daß auf den Zusatzaufwand entsprechender Pumpen oder dgl. auf der Behälterseite verzichtet werden kann.

Vorratsbehälter gattungsgemäßer Bauart weisen im Bereich ihres Bodens ein Entnahmeorgan für das Füllgut auf, von dem aus das Füllgut mittels einer Fördereinrichtung zu einem am Deckel angeordneten Austragsorgan gefördert wird, von wo aus es dann beispielsweise in eine Betonmischanlage eingebracht wird. Durch Anordnung der insbesondere als Trans-Vorratsbehälter in eine vertikale Position gekippt und nach dem Ausfahren der Stützfüße auf die Fertigfundamente abgesetzt.

Mit dem Absetzen ist gleichzeitig auch eine Lösung der Verbindung zwischen dem Vorratsbehälter und der ihn haltenden Kippbrücke erzielbar, indem an der Kippbrücke Haltemittel zur lösbaren, formschlüssigen Befestigung des Vorratsbehälter, insbesondere in Form von Haltebolzen zum Eingriff in behälterfeste Halteaugen, vorgesehen sind. Die Haltebolzen weisen dabei vorteilhaft hydraulisch betätigbare Sicherungseinrichtungen auf, so daß einerseits der Vorratsbehälter während des Transportes sicher gehalten ist, andererseits ein automatisiertes Entriegeln auf einfachste Weise ermöglicht ist. Die fahrzeugseitige Hydraulikanlage für die hydraulische Betätigung der Positioniervorrichtungen, für das Kippen der Kippbrücke und für das Entriegeln der Sicherungseinrichtungen an den Haltebolzen weist vorteilhaft eine hydraulische Anschlußeinrichtung zum Anschluß und zur Versorgung von behälterseitigen Hydraulikzylindern auf. Dadurch können mit einer einzigen Hydraulikanlage alle wesentlichen Verfahrensschritte zum Aufstellen des Vorratsbehälters ausgeführt werden.

Da beim Aufstellen des Vorratsbehälters von seiner horizontalen Transportlage durch eine Kippbewegung in die vertikale Aufstellage der Schwerpunkt des Vorratsbehälters über die Hinterachse des Transportfahrzeuges bzw. über die Kippachse der Kippbrücke bewegt wird, sind in diesem Bereich zweckmäßig hydraulisch absenkbare Stützen vorgesehen, mit denen ein übermäßiges Einfedern oder eine Schrägstellung der Hinterachse vermeidbar ist. Dadurch kann der Vorratsbehälter präzise über den bereitgestellten Fertigfundamenten positioniert werden. Anschließend wird der Vorratsbehälter portschnecke ausgebildeten Fördereinrichtung innerhalb der Umfangswand des Vorratsbehälters kann die Umfangswand ohne weitere Einschränkungen konstruktiv mit den für den Straßentransport zulässigen Außenmaßen versehen werden. Dadurch ist insgesamt eine weitere Vergrößerung des Vorratsraumes und damit einhergehend eine weitere Verbesserung der Wirtschaftlichkeit erzielbar.

Eine einfache Transportier- und Aufstellbarkeit des Vorratsbehälters mit geringem konstruktiven und fertigungstechnischen Aufwand ist durch die Anordnung von Haltemitteln zur lösbaren, formschlüssigen Befestigung am Transportfahrzeug gegeben, bei denen die Löserichtung etwa parallel zur Längsachse des Vorratsbehälters liegt. Insbesondere bei Ausführung der Haltemittel als eine Anzahl von behälterfesten Halteaugen zur Aufnahme von fahrzeugfesten Haltebolzen ist einerseits ein sicherer Halt des Behälters beim Straßentransport gegeben. Andererseits kann beispielsweise beim Aufstellen des Vorratsbehälters mittels einer fahrzeugfesten Kippbrücke die Verbindung zwischen dem Vorratsbehälter und dem Transportfahrzeug einfach und schnell gelöst werden, indem die Kippbrücke oder das Transportfahrzeug selbst abgesenkt wird. Durch den Absenkvorgang wird der Vorratsbehälter zunächst auf bereitgestellte Fundamente abgesenkt und anschließend die Haltebolzen aus den Halteaugen herausgezogen.

Zum Transport und zum Aufstellen von mobilen Vorratsbehältern insbesondere der oben beschriebenen Art wird vorgeschlagen, ein Transportfahrzeug mit Positioniervorrichtung zum Transport und zum Absetzen von Fertigfundamenten für den Vorratsbehälter zu versehen. Dadurch können gemeinsam mit dem Vorratsbehälter geeignete Fertigfundamente mitgeführt und am Aufstellort abgesetzt werden. Dadurch entfällt der Zusatzaufwand des Baus von Fundamenten oder der separaten Anlieferung entsprechender Fundamentteile. Durch das Mitführen und Absetzen von Fertigfundamenten mittels des gleichen Fahrzeuges, mit dem auch der Vorratsbehälter angeliefert wird, ist beim Aufstellen ein erheblicher Zeitgewinn gegeben. Zu jedem Vorratsbehälter kann ein entsprechender Satz von Fertigfundamenten bereitgestellt werden, die als Einheit zusammen mit dem Behälter transportierbar sind. Nach dem Aufstellen ist das Transportfahrzeug frei für den Transport weiterer Vorratsbehälter. Dabei hat sich eine Anordnung der Positioniervorrichtungen mittig an beiden Seiten des Transportfahrzeuges als vorteilhaft herausgestellt. Die schweren Fertigfundamente sind dadurch während des Transportes nahe einem Fahrzeugschwerpunkt gehalten, wodurch eine gleichmäßige Belastung der einzelnen Fahrzeugachsen gegeben ist.

In einer bevorzugten Ausbildung für die Aufstellung von Vorratsbehältern mit seitlich ausfahrbaren Stützfüßen sind auch die Positioniervorrichtungen seitlich bezogen auf die Längsrichtung des Transportfahrzeuges insbesondere hydraulisch angetrieben ausfahrbar gestaltet. Dazu können entweder in seitliche Richtung verschwenkbare oder teleskopartig linear bewegliche Kragarme vorgesehen sein. Zum Absenken und Anheben der Fertigfundamente sind in den Positioniervorrichtungen vertikal ausgerichtete Hydraulikzylinder vorgesehen, die vorteilhaft an den äußeren Enden der beweglichen Kragarme angebracht sind. Damit können die Fertigfundamente, die bevorzugt flach aus Beton oder Stahlguß ausgebildet sind, mittels des Transportfahrzeuges über den Aufstellort gebracht und anschließend auf ein geeignetes Maß seitlich ausgefahren und abgesenkt werden. Das Transportfahrzeug wird anschließend zwischen den Fertigfundamenten hindurch so weit nach vorne gefahren, daß die Stützfüße des Vorratsbehälters über den Fertigfundamenten positioniert sind. Mittels der Kippbrücke wird dann der kraftwagen (LKW) führt zu logistischen Problemen, da ein solcher LKW zeitlich exakt abgestimmt genau dann an der Baustelle erscheinen muß, wenn der Vorratsbehälter entsprechend entleert ist. Ein zu frühes Erscheinen des LKWs an der Baustelle führt zu der Situation, daß dessen Transportgut nicht vollständig in den noch nicht hinreichend entleerten Vorratsbehälter eingefüllt werden kann. Eine zu späte Ankunft zieht ein vollständiges Entleeren des Vorratsbehälters und damit eine Unterbrechung des Produktionsvorganges nach sich mit entsprechender Wirkung auf die Wirtschaftlichkeit.

Entsprechend größere mobile Vorratsbehälter für den Leertransport und Befüllung an der Baustelle sind jedoch durch die Anordnung der Stützbeine und der dadurch bestimmten Statik beschränkt. Dies limitiert jedoch die Größe des Behälters insbesondere im Hinblick auf die seitlich auf den vertikal aufgerichtet stehenden Vorratsbehälter wirkenden Windkräfte. Zur Einhaltung der jeweils gültigen Windlastvorschriften bei einer gegebenen Statik der Stützfüße kann deshalb die Höhe des aufgestellten Vorratsbehälters ein gewisses Maß nicht überschreiten. Dadurch ist das Gesamtvolumen und damit die Wirtschaftlichkeit des Vorratsbehälters beschränkt.

DE 195 06 424 A offenbart einen Klein-Container mit ausfahrbaren Stützfüßen, der aufrecht transportiert wird.

Der Erfindung liegt die Aufgabe zugrunde, einen gattungsgemäßen mobilen Vorratsbehälter derart weiterzubilden, daß dessen Wirtschaftlichkeit verbessert ist.

Die Aufgabe wird durch einen mobilen Vorratsbehälter mit den Merkmalen des Anspruchs 1 gelöst.

Der Erfindung liegt des weiteren die Aufgabe zugrunde, ein Transportfahrzeug mit verbesserter Wirtschaftlichkeit insbesondere für einen erfindungsgemäßen mobilen Vorratsbehälter bereitzustellen.

Die Aufgabe wird durch ein Transportfahrzeug mit den Merkmalen des Anspruchs 14 gelöst.

Der Erfindung liegt außerdem die Aufgabe zugrunde, ein zeitsparendes Verfahren zum Aufstellen mobiler Vorratsbehälter zu entwickeln.

Die Aufgabe wird durch ein Verfahren mit den Merkmalen des Anspruchs 28 gelöst.

Erfindungsgemäß ist an den Stützbeinen eines Vorratsbehälters je ein im wesentlichen quer zur Längsachse über die Außenkontur der Behälterwand ausfahrbaren Stützfuß vorgesehen. Dadurch ist die Möglichkeit eröffnet, einen entsprechend großen Behälter unter Wahrung der Transportfähigkeit im Straßenverkehr im leeren Zustand zu konstruieren. Die ausfahrbaren Stützfüße stehen dabei während des Transportes nicht über die Außenkontur des Vorratsbehälters hervor, so daß das Konstruktionsvolumen des Vorratsraumes nur durch die zulässigen Transportmaße bzw. durch sein zulässiges Leergewicht beschränkt ist. Dabei hat sich ein Volumen des Vorratsraumes von etwa 60 Kubikmeter insbesondere in Verbindung mit einem etwa kreisrunden Behälterquerschnitt als vorteilhaft herausgestellt. Bei einer Ausführung in entsprechender Leichtbauweise beispielsweise in Verbindung mit einem vieleckigen oder quadratischen Querschnitt kann auch ein größeres Volumen erzielbar sein.

Die mit der entsprechenden Behältergröße einhergehenden Standlasten an den Stützbeinen im aufgestellten Zustand des Vorratsbehälters und insbesondere die auftretenden Windlasten können durch die ausfahrbaren Stützfüße zuverlässig durch Absenken der Kippbrücke und insbesondere durch Absenken des rückwärtigen Bereiches des Transportfahrzeuges mittels dessen Luftfederung auf die Fertigfundamente aufgesetzt. Durch weiteres Absenken werden die fahrzeugfesten Haltebolzen aus den behälterfesten Halteaugen herausgezogen, so daß nach Trennen der gegebenenfalls vorhandenen hydraulischen Anschlußeinrichtungen der Vorratsbehälter von der ihn haltenden Kippbrücke freigegeben ist. Dadurch ist in zeitsparender Weise der Vorratsbehälter in einen einsatzbereiten Zustand versetzt und das Transportfahrzeug für weitere Transportaufgaben bereitgestellt.

Ein Ausführungsbeispiel der Erfindung wird im folgenden anhand der Zeichnung näher erläutert. Es zeigen:
- Fig. 1: In Seitenansicht einen Sattelzug mit Fertigfundamenten und einem aufliegenden Vorratsbehälter.
- Fig. 2: Eine Seitenansicht des Sattelzuges nach Fig. 1 mit abgesetzten Fertigfundamenten.
- Fig. 3: Den Sattelzug nach Fig. 1 in einer Position, bei dem die Stützfüße des mitgeführten Vorratsbehälters über den abgesetzten Fertigfundamenten positioniert sind.
- Fig. 4: Den Sattelzug nach Fig. 3 mit dem in einer Kippbrücke gehaltenen Vorratsbehälter in vertikaler Position.
- Fig. 5: In einer Draufsicht den Vorratsbehälter nach Fig. 4 mit seitlich ausgefahrenen Stützfüßen.
- Fig. 6: Eine Seitenansicht des Sattelzuges nach Fig. 3 mit abgesenkter Luftfederung sowie den mit seinen Stützfüßen auf den Fertigfundamenten stehenden Vorratsbehälter.

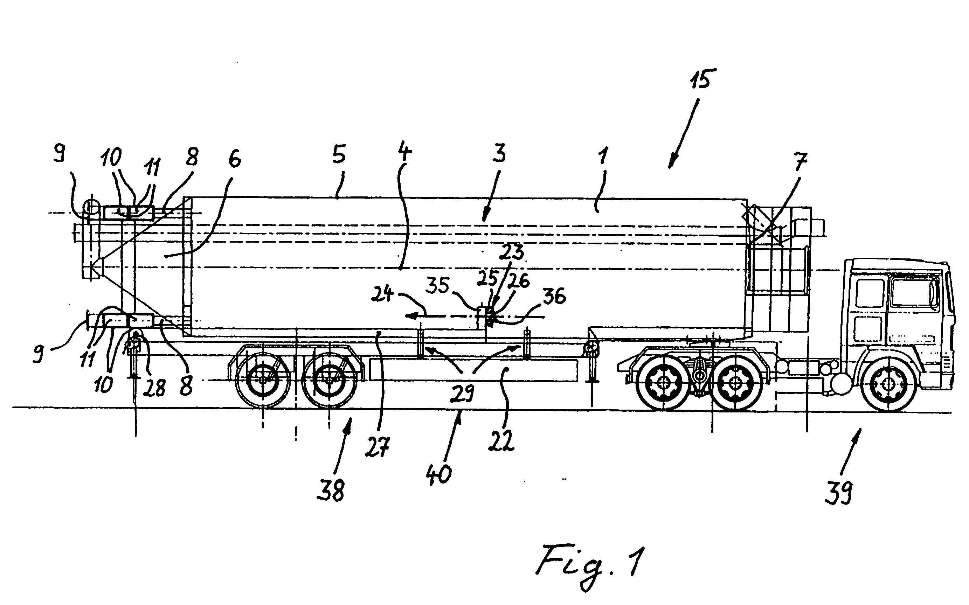

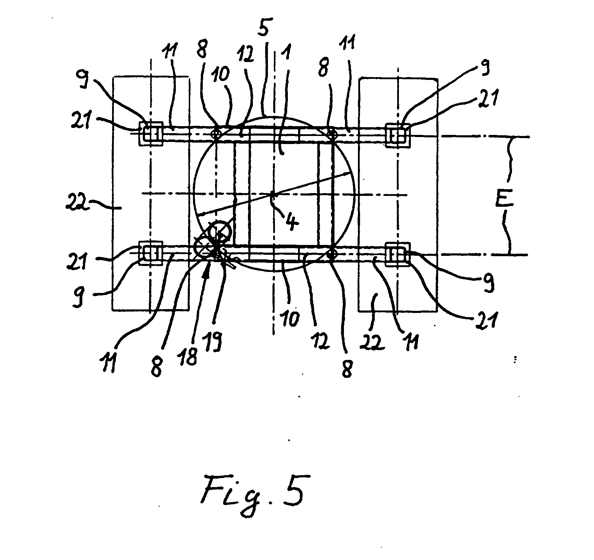

Fig. 1 zeigt ein Transportfahrzeug 15 in Form eines Sattelzuges, bestehend aus einem Sattelschlepper 39 und einem Auflieger 38. Auf dem Auflieger 38 ist ein Vorratsbehälter 1 mit dessen Längsachse 4 in horizontaler Position gehalten. Der Vorratsbehälter 1 weist im Bereich seines Bodens 6 vier Stützbeine 8 mit je einem Stützfuß 9 auf. Der jeweils im Bereich der Längsachse 4 angeordnete Boden 6 und der Deckel 7 begrenzen zusammen mit der Umfangswand 5 in Form einer zylindrischen Röhre einen Vorratsraum 3. An den Stützbeinen 8 sind insgesamt vier zwei Paare bildende Führungsrohre 10 mit einem etwa rechteckigen Querschnitt vorgesehen, in denen je eine Tragarm 11 linear beweglich geführt ist. Einzelheiten der Anordnung im Bereich der Stützfüße 9 sind weiter unten in den Ausführungen zur Fig. 5 beschrieben.

Am Auflieger 38 ist eine um eine senkrecht zur Längsachse 4 liegende Kippachse 28 kippbare Kippbrücke 27 angebracht, in der der Vorratsbehälter 1 gehalten ist. Am Vorratsbehälter 1 und an der Kippbrücke 27 sind jeweils Haltemittel 23, 35 zur formschlüssigen Anbindung des Vorratsbehälters 1 an die Kippbrücke 27 vorgesehen. Die Löserichtung der formschlüssigen Anbindung ist durch den Pfeil 24 angedeutet und liegt etwa parallel zur Längsachse 4. Die Haltemittel 23 und 35 umfassen im gezeigten Ausführungsbeispiel eine Anzahl von behälterfeste Halteaugen 25, in denen an der Kippbrücke 27 angebrachte Haltebolzen 26 aufgenommen sind und an denen hydraulisch entriegelbare Sicherungseinrichtungen für den Straßentransport vorgesehen sind. Auf beiden Seiten des Aufliegers 38 sind je zwei Positioniervorrichtungen 29 vorgesehen, an denen Fertigfundamente 22 gehalten sind. Das Transportfahrzeug 15 ist in einem ersten Verfahrensschritt mit den Fertigfundamenten 22 über den für den Vorratsbehälter 1 vorgesehenen Aufstellort 40 gefahren.

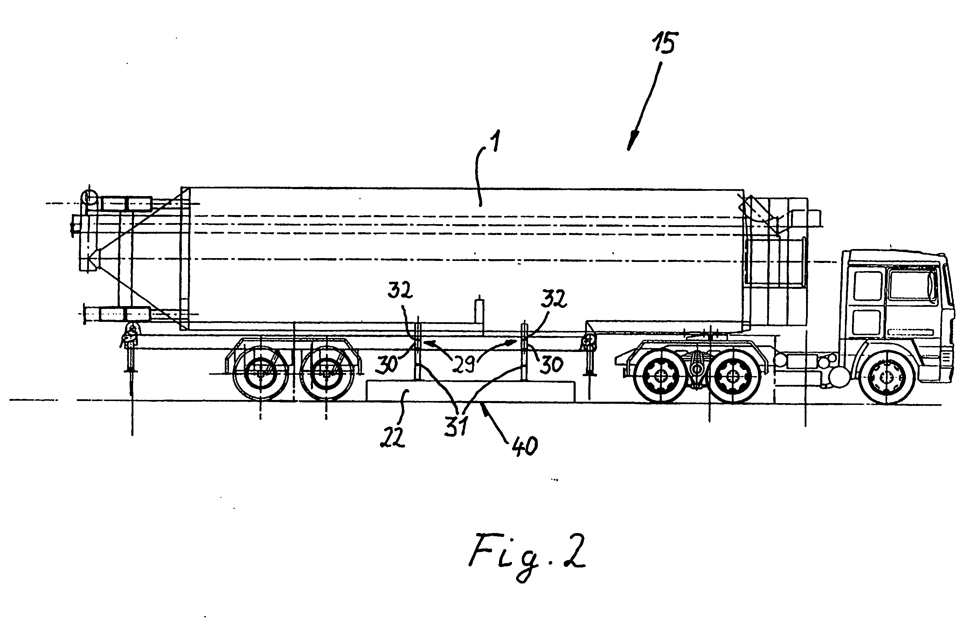

Fig. 2 zeigt einen folgenden Verfahrensschritt, bei dem die Fertigfundamente 22 seitlich über die Kontur des Transportfahrzeuges 15 hinaus ausgefahren und am Aufstellort 40 abgesetzt sind. Dazu sind die Positioniervorrichtungen 29 an beiden Seiten des Transportfahrzeuges 15 seitlich bezüglich der Längsachse des Transportfahrzeuges 15 ausfahrbar gestaltet, in dem teleskopartig bewegliche Kragarme 33 der Positioniervorrichtungen 29 hydraulisch ausgefahren sind. An den äußeren Enden 32 der Kragarme 30 befinden sich Hydraulikzylinder 31, mit denen die Fertigfundamente 22 abgesenkt sind. Anstelle der Hydraulikeinrichtungen können auch Spindelantriebe oder dergleichen vorgesehen sein. Des weiteren ist eine Ausführung möglich, bei der Hydraulikzylinder 31 zwischen dem Auflieger 38 und den Positioniervorrichtungen 29 angeordnet sind, mit denen die Positioniervorrichtungen 29 zusammen mit den Fertigfundamenten 22 absenkbar sind.

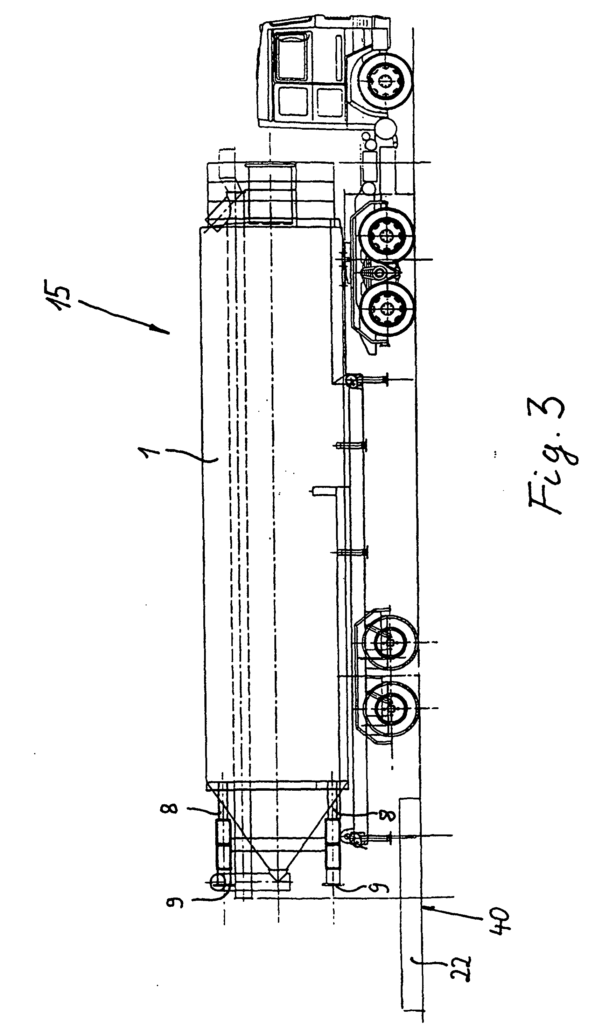

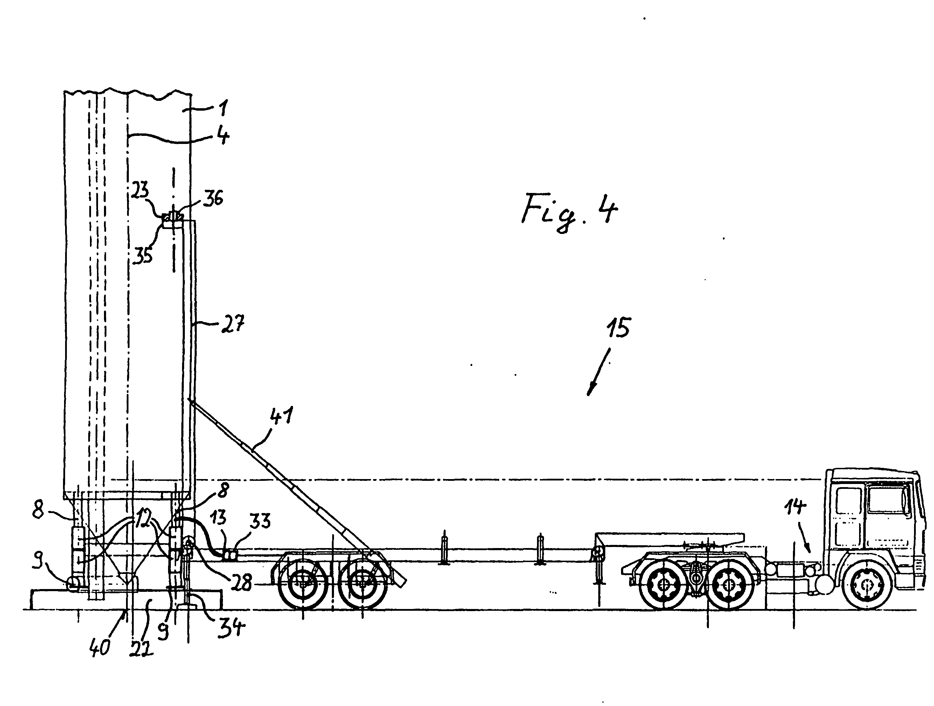

Fig. 3 und Fig. 4 zeigen nacheinander die nächsten Verfahrensschritte, bei denen zunächst das Transportfahrzeug 15 zwischen den Fertigfundamenten 22 hindurch so weit vorwärtsbewegt ist, daß die Stützbeine 8 mit ihren Stützfüßen 9 im Bereich der Fertigfundamente positioniert sind. Anschließend werden, wie in Fig. 4 gezeigt, zwei im Bereich der Kippachse 28 angeordnete Stützen hydraulisch abgesenkt und die Kippbrücke 27 mit einem Hydraulikzylinder 41 so weit gekippt, daß die Längsachse 4 des Vorratsbehälters 1 im wesentlichen vertikal ausgerichtet ist. In dieser Position wird die Sicherungseinrichtung 36 hydraulisch entriegelt, wobei der Vorratsbehälter 1 weiterhin in den Haltemitteln 23, 35 formschlüssig gehalten ist. Die im Bereich der Stützbeine vorgesehenen Hydraulikzylinder 12 zum seitlichen Ausfahren der Stützfüße 9 sind über je eine behälterseitige und fahrzeugseitige hydraulische, schematisch dargestellte Anschlußeinrichtung 13, 33 mit der Hydraulikanlage 14 des Transportfahrzeuges 15 verbunden.

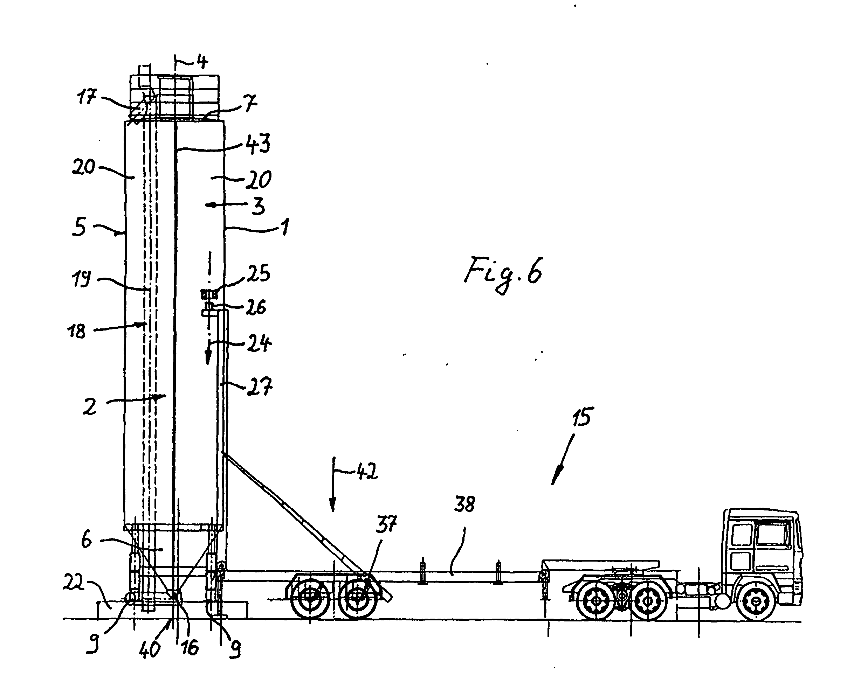

Fig. 5 zeigt in einer Draufsicht, daß die Umfangswand 5 des Vorratsbehälters 1 einen etwa kreisförmigen Querschnitt einschließt. Es können aber auch Querschnitte mit vieleckiger, quadratischer oder anderer geeigneter Form vorteilhaft sein. Im Bereich der Umfangswand 5 sind vier Stützbeine 8 angeordnet, von denen zwei jeweils in einer Ebene E liegen. Innerhalb der Ebenen E sind die an Tragarmen 11 befestigten Stützfüße 9 im wesentlichen quer zur Längsachse 4 über die Außenkontur der Umfangswand 5 ausgefahren und über zwei Fertigfundamenten 22 positioniert. Zur Abstützung von Windlasten auf den Vorratsbehälter 1 insbesondere in einer senkrecht zu den Ebenen E liegenden Richtung weisen die Stützfüße 9 Mittel 21 zur lösbaren Befestigung an den Fundamenten 22 auf. Die Tragarme 11 sind in den in Fig. 1 näher gezeigten Führungsrohren 10 linear beweglich geführt und über Hydraulikzylinder 12 seitlich ausgefahren. Die Hydraulikzylinder 12 können eine eigene Hydraulikversorgung aufweisen und sind im gezeigten Ausführungsbeispiel, wie auch in Fig. 4 näher gezeigt, mit der Hydraulikanlage 14 des Transportfahrzeuges 15 verbunden. Bezüglich der Ausfahrkinematik der Stützfüße 9 können auch Anordnungen vorteilhaft sein, bei denen die Stützbeine 8 mit daran befestigten Stützfüßen 9 um parallel zur Längsachse 4 liegende Schwenkachsen seitlich ausschwenkbar oder um tangential zur Umfangswand 5 liegende Klappachsen seitlich nach Art eines Regenschirmes ausklappbar sind. Der Fig. 5 ist weiter zu entnehmen, daß die unten im Zusammenhang mit der Fig. 6 näher beschriebene Fördereinrichtung 18 in Form einer Transportschnecke 19 innerhalb der Umfangswand 5 verläuft.

In Fig. 6 ist gezeigt, daß der Vorratsbehälter mit seinen Stützfüßen 9 durch Absenken der Kippbrücke 28 auf die Fertigfundamente 22 abgesetzt ist. Die Kippbrücke 28 ist so weit abgesenkt, daß die Haltebolzen 26 nicht mehr in Eingriff mit den Halteaugen 25 stehen. Die Kippbrücke 28 kann relativ zum Auflieger 38 absenkbar ausgebildet sein und ist im gezeigten Ausführungsbeispiel gemeinsam mit dem Auflieger 38 durch eine daran angeordnete höhenverstellbare Luftfederung 37 in Richtung des Pfeiles 42 abgesenkt. Im gezeigten Zustand ist der Vorratsbehälter 1 von der Kippbrücke 27 freigegeben, so daß der Vorratsbehälter aufgestellt und einsatzbereit ist und das Transportfahrzeug 15 nach Kippen der Kippbrücke 27 in die in Fig. 1 gezeigte Position entfernt werden kann. Der Abbau und der Abtransport eines nicht mehr gebrauchten Vorratsbehälters 1 erfolgt umgekehrt zu oben beschriebener Reihenfolge.

Der gezeigte Vorratsbehälter 1 ist ein Zementsilo, dessen Füllgut 2 Zement ist, der aber auch zur Aufnahme von Kalkoder Zementputz, Sand oder anderen rieselfähigen Füllgütern 2 dienen kann. Es sind auch Ausführungen des Vorratsbehälters 1 zur Aufnahme von Flüssigkeiten oder als Druckbehälter zur Aufnahme von Flüssiggasen oder dergleichen möglich. Der Vorratsbehälter 1 kann einen einzigen durchgehenden Vorratsraum 3 aufweisen und nach Fig. 6 ist der Vorratsraum 3 durch eine schematisch angedeutete Trennwand 43 in zwei Teilräume 20 aufgeteilt. Das Füllgut 2 wird aus dem Vorratsbehälter 1 durch ein am Boden 6 angeordnetes Entnahmeorgan 16 entnommen und durch eine innerhalb der Umfangswand 5 (Fig. 5) verlaufende Fördereinrichtung 18 in Form einer Transportschnecke 19 zu einem im Bereich des Deckels 7 angeordneten Austragsorgan 17 gefördert. Von dort kann das Füllgut 2 beispielsweise in eine Betonmischanlage eingefüllt werden. Anstelle der Transportschnecke 19 kann auch eine pneumatische Fördereinrichtung oder dgl. vorgesehen sein.

## Patentansprüche

1. Mobiler Vorratsbehälter (1) für ein Füllgut (2), dessen Vorratsraum (3) mit einer Längsachse (4) durch eine Umfangswand (5) und bezogen auf die Längsachse (3) durch einen Boden (6) und einen Deckel (7) begrenzt ist, der liegend mit seiner etwa horizontal ausgerichteten Längsachse (4) mit einem Transportfahrzeug (15) im Straßenverkehr transportiert wird und der im Bereich des Bodens (6) Stützbeine (8) zum Aufstellen auf Baustellen oder dgl. mit etwa vertikal ausgerichteter Längsachse (4) aufweist,
**dadurch gekennzeichnet, daß** an den Stützbeinen (8) je ein im wesentlichen quer zur Längsachse (4) über die Außenkontur der Umfangswand (5) hinaus ausfahrbarer Stützfuß (9) vorgesehen ist.

2. Vorratsbehälter nach Anspruch 1,
**dadurch gekennzeichnet, daß** insgesamt vier Stützbeine (8) mit je einem Stützfuß (9) vorgesehen sind, wobei vorzugsweise je zwei Stützbeine (8) paarweise in einer Ebene (E) liegen und die jeweiligen Stützfüße (9) in Richtung dieser Ebene (E) ausfahrbar sind.

3. Vorratsbehälter nach einem der Ansprüche 1 oder 2,
**dadurch gekennzeichnet, daß** im Bereich der Stützbeine (8) senkrecht zur Längsachse (4) angeordnete Führungsrohre (10) vorgesehen sind, in denen Tragarme (11) mit den daran befestigten Stützfüßen (9) linear beweglich geführt sind.

4. Vorratsbehälter nach einem der Ansprüche 1 bis 3,
**dadurch gekennzeichnet, daß** im Bereich der Stützbeine (8) Hydraulikzylinder (12) zum Ausfahren der Stützfüße (9) vorgesehen sind und eine hydraulische Anschlußeinrichtung (13) zum Anschluß der Hydraulikzylinder (12) an eine Hydraulikanlage (14) des Transportfahrzeuges (15) vorgesehen ist.

5. Vorratsbehälter nach einem der Ansprüche 1 bis 4,
**dadurch gekennzeichnet, daß** im Bereich des Bodens (6) ein Entnahmeorgan (16), im Bereich des Deckels (7) ein Austragsorgan (17) und zwischen dem Entnahme- und dem Austragsorgan (16, 17) eine Fördereinrichtung (18) für das Füllgut (2) vorgesehen ist, wobei die Fördereinrichtung (18) innerhalb der Umfangswand (5) verläuft, wobei vorzugsweise die Fördereinrichtung (18) eine Transportschnecke (19) ist.

6. Vorratsbehälter nach einem der Ansprüche 1 bis 5,
**dadurch gekennzeichnet, daß** der Vorratsraum (3) in Teilräume (20) aufgeteilt ist.

7. Vorratsbehälter nach einem der Ansprüche 1 bis 6,
**dadurch gekennzeichnet, daß** das Volumen des Vorratsraumes (3) etwa 60 m³ beträgt.

8. Vorratsbehälter nach einem der Ansprüche 1 bis 7,
**dadurch gekennzeichnet, daß** am Vorratsbehälter (1) Haltemittel (23) zur lösbaren, formschlüssigen Befestigung am Transportfahrzeug (15) vorgesehen sind, deren Löserichtung (24) etwa parallel zur Längsachse (4) des Vorratsbehälters (1) liegt, wobei vorzugsweise die Haltemittel (23) eine Anzahl von behälterfesten Halteaugen (25) zur Aufnahme von fahrzeugfesten Haltebolzen (26) sind.

9. Transportfahrzeug zum Transport und zum Aufstellen eines mobilen Vorratsbehälters (1) nach einem der Ansprüche 1-8 mit einer Kippbrücke (27) zur Aufnahme des Vorratsbehälters (1), wobei die Kippbrücke (27) von einer Transportposition zum Transport des Vorratsbehälters (1) mit dessen Längsachse (4) in etwa horizontaler Ausrichtung um eine horizontale Kippachse (28) in eine Aufstellposition zum Aufstellen des Vorratsbehälters (1) mit dessen Längsachse (4) etwa in vertikaler Ausrichtung kippbar ist,
**dadurch gekennzeichnet, daß** am Transportfahrzeug (15) Positioniervorrichtungen (29) zum Transport und zum Absetzen von Fertigfundamenten (22) für den Vorratsbehälter (1) vorgesehen sind, wobei die Positioniervorrichtungen (29) an beiden Seiten des Transportfahrzeuges (15) angeordnet und seitlich bezüglich des Transportfahrzeuges (15) ausfahrbar sind.

10. Transportfahrzeug nach Anspruch 9,
**dadurch gekennzeichnet, daß** die Positioniervorrichtungen (29) in bezogen auf die Längsrichtung des Transportfahrzeuges (15) seitliche Richtung verschwenkbare oder teleskopartig linear bewegliche Kragarme (30) umfassen.

11. Transportfahrzeug nach einem der Ansprüche 9 oder 10,
**dadurch gekennzeichnet, daß** die Positioniervorrichtungen (29) etwa vertikal ausgerichtete Hydraulikzylinder (31) zum Absenken und Anheben der Fertigfundamente (22) umfassen, wobei die Hydraulikzylinder (31) an den äußeren Enden (32) der Kragarme (30) vorgesehen sind.

12. Transportfahrzeug nach einem der Ansprüche 9 bis 11,
**dadurch gekennzeichnet, daß** das Transportfahrzeug (15) eine hydraulische Anschlußeinrichtung (33) zum Anschluß und zur Versorgung von behälterseitigen Hydraulikzylindern (12) aufweist.

13. Transportfahrzeug nach einem der Ansprüche 9 bis 12,
**dadurch gekennzeichnet, daß** im Bereich der Kippachse (28) hydraulisch absenkbare Stützen (34) vorgesehen sind.

14. Transportfahrzeug nach einem der Ansprüche 9 bis 13,
**dadurch gekennzeichnet, daß** an der Kippbrücke (27) Haltemittel (35) zur lösbaren, formschlüssigen Befestigung des Vorratsbehälters (1) vorgesehen sind, die vorzugsweise als Haltebolzen (26) zum Eingriff in behälterfeste Halteaugen (25) ausgebildet sind und hydraulisch betätigbare Sicherungseinrichtungen (36) aufweisen.

15. Transportfahrzeug nach einem der Ansprüche 9 bis 14,
**dadurch gekennzeichnet, daß** die Kippbrücke (27) absenkbar ist, wobei vorzugsweise das Transportfahrzeug (15) eine Luftfederung (37) aufweist und der rückwärtige Bereich des Transportfahrzeugs mittels der Luftfederung (37) absenkbar ist.

16. Verfahren zum Aufstellen eines mobilen Vorratsbehälters (1) nach einem der Ansprüche 1-8 mittels eines Transportfahrzeuges (15) nach einem der Ansprüche 9-15, welches folgende Schritte umfaßt:
- Das Transportfahrzeug (15) fährt mit an Positioniervorrichtungen (29) gehaltenen Fertigfundamenten (22) an einen Aufstellort (40);
- die Fertigfundamente (22) werden seitlich über die Kontur des Transportfahrzeuges (15) hinaus ausgefahren;
- die Fertigfundamente (22) werden am Aufstellort (40) abgesetzt;
- das Transportfahrzeug (15) wird so weit bewegt, daß die Stützbeine (8) des Transportbehälters (1) im Bereich über den Fertigfundamenten (22) positioniert sind;
- mittels der Kippbrücke (27) wird der in ihr gehaltene Vorratsbehälter (1) von einer etwa horizontalen Transportlage seiner Längsachse (4) in eine etwa vertikale Aufstellage der Längsachse (4) gekippt;
- die an den Stützbeinen (8) vorgesehenen Stützfüße (9) werden in einer den Abstand zur Längsachse (4) des Transportbehälters (1) vergrößernden Richtung über die Kontur der Umfangswand (5) hinaus in eine von den Fertigfundamenten (22) vorgegebene Position verbracht.
- der Transportbehälter (1) wird mit den Stützfüßen (9) auf die Fertigfundamente (22) abgesetzt;
- der Transportbehälter (1) wird von der ihn haltenden Kippbrücke (27) freigegeben;
- das Transportfahrzeug (15) wird vom Aufstellort (40) weggefahren.

17. Verfahren nach Anspruch 16,
**dadurch gekennzeichnet, daß** die Freigabe des Vorratsbehälters (1) von der ihn haltenden Kippbrücke (27) durch Absenken der Kippbrücke (27) mittels der am Transportfahrzeug (15) vorgesehenen Luftfederung erfolgt.

## Claims

1. Mobile storage container (1) for a material (2), whose storage space (3) having a longitudinal axis (4) is delimited by a peripheral wall (5) and, relative to the longitudinal axis (3), by a bottom (6) and a lid (7), wherein the container is transported in a horizontal position with its longitudinal axis (4) approximately horizontally aligned on a transport vehicle (15) on roads and, in the area of the bottom (6), has support legs (8) for erecting it at construction sites or the like so that the longitudinal axis (4) is approximately vertically aligned,
**characterized in that** on each support leg (8) a support foot (9) is provided, respectively, which is extendable substantially transversely to the longitudinal axis (4) past the outer contour of the peripheral wall (5).

2. Storage container according to claim 1,
**characterized in that** a total of four support legs (8) are provided each having a support foot (9), wherein preferably two support legs (8) are arranged as pairs, respectively, in a plane (E) and the support feet (9) are extendable in the direction of this plane (E), respectively.

3. Storage container according to any one of claims 1 or 2,
**characterized in that** in the area of the support legs (8) guide pipes (10) are arranged perpendicularly to the longitudinal axis (4), in which guide pipes support arms (11) with the support feet (9) connected thereto are guided in a linearly movable fashion.

4. Storage container according to any one of claims 1 to 3,
**characterized in that** in the area of the support legs (8) hydraulic cylinders (12) are provided for extension of the support feet (9), and a hydraulic connecting device (13) for connection of the hydraulic cylinders (12) to a hydraulic device (14) of the transport vehicle (15) is provided.

5. Storage container according to any one of claims 1 to 4,
**characterized in that** in the area of the bottom (6) a removal member (16), in the area of the lid (7) a delivery member (17), and between the removal and delivery members (16, 17) a conveying device (18) for the material (2) is provided, wherein the conveying device (18) extends within the peripheral wall (5), wherein preferably the conveying device (18) is a transport screw (19).

6. Storage container according to any one of claims 1 to 5,
**characterized in that** the storage space (3) is divided into partial spaces (20).

7. Storage container according to any one of claims 1 to 6,
**characterized in that** the volume of the storage space (3) is approximately 60 m³.

8. Storage container according to any one of claims 1 to 7,
**characterized in that** on the storage container (1) securing means (23) for a releasable positive-locking attachment on the transport vehicle (15) are provided whose release direction (24) is approximately parallel to the longitudinal axis (4) of the storage container (1), wherein preferably the securing means (23) are a number of securing eyes (25) fastened on the container for receiving securing bolts (26) fastened on the vehicle.

9. Transport vehicle for transporting and installing a mobile storage container (1) according to any one of claims 1 to 8 having a tipping bridge (27) for receiving the storage container (1), wherein the tipping bridge (27) can be tilted from a transport position for transporting the storage container (1) with its longitudinal axis (4) in an approximately horizontal alignment about a horizontal tipping axis (28) into an erecting position for installing the storage container (1) with its longitudinal axis (4) in approximately vertical alignment,
**characterized in that** on the transport vehicle (15) positioning devices (29) for transporting and placing ready-made foundations (22) for the storage container (1) are provided, wherein the positioning devices (29) are arranged on both sides of the transport vehicle (15) and are extendable laterally relative to the transport vehicle (15).

10. Transport vehicle according to claim 9,
**characterized in that** the positioning devices (29) comprise cantilever arms (30) that are pivotable in a lateral direction relative to the longitudinal direction of the transport vehicle (15) or linearly moveable in a telescoping fashion.

11. Transport vehicle according to any of claims 9 or 10,
**characterized in that** the positioning devices (29) comprise approximately vertically aligned hydraulic cylinders (31) for lowering and lifting the ready-made foundations (22), wherein the hydraulic cylinders (31) are provided on the outer ends (32) of the cantilever arms (30).

12. Transport vehicle according to any one of claims 9 to 11,
**characterized in that** the transport vehicle (15) comprises a hydraulic connecting device (33) for connecting and supplying the hydraulic cylinders (12) of the container.

13. Transport vehicle according to any one of claims 9 to 12,
**characterized in that** in the area of the tipping axis (28) hydraulically lowerable supports (34) are provided.

14. Transport vehicle according to any one of claims 9 to 13,
**characterized in that** on the tipping bridge (27) securing means (35) for a detachable positive-locking attachment of the storage container (1) are provided which are preferably embodied as securing bolts (26) for engagement of securing eyes (25) fastened on the container and have hydraulically actuatable securing devices (36).

15. Transport vehicle according to any one of claims 9 to 14,
**characterized in that** the tipping bridge (27) can be lowered, wherein preferably the transport vehicle (15) comprises a pneumatic suspension device (37) and the rearward area of the transport vehicle can be lowered by means of the pneumatic suspension device (37).

16. Method for installing a mobile storage container (1) according to any one of claims 1 to 8 by means of a transport vehicle (15) according to any one of claims 9 to 15, which method comprises the following steps:
- The transport vehicle (15) moves with ready-made foundations (22) secured on positioning devices (29) to an installation location (40);
- the ready-made foundations (22) are moved outwardly laterally past the contour of the transport vehicle (15);
- the ready-made foundations (22) are placed at the installation location (40);
- the transport vehicle (15) is moved to such an extent that the support legs (8) of the transport container (1) are positioned in the area above the ready-made foundations (22);
- by means of the tipping bridge (27) the storage container (1) held by it is tilted from an approximately horizontal transport position of its longitudinal axis (4) into an approximately vertical installation position of its longitudinal axis (4);
- the support feet (9) provided on the support legs (8) are moved in a direction enlarging the spacing relative to the longitudinal axis (4) of the transport container (1) past the contour of the peripheral wall (5) into a position predetermined by the ready-made foundations (22);
- the transport container (1) is placed with the support feet (9) onto the ready-made foundations (22) ;
- the transport container (1) is released from the tipping bridge (27) holding it;
- the transport vehicle (15) is moved away from the installation location (40).

17. Method according to claim 16,
**characterized in that** the release of the storage container (1) from the tipping bridge (27) holding it is realized by lowering the tipping bridge (27) by means of the pneumatic suspension device provided on the transport vehicle (15).

## Revendications

1. Réservoir de stockage mobile (1) pour un produit de remplissage, (2) dont l'espace de stockage (3), possédant un axe longitudinal (4), est délimité par une paroi périphérique (5) et, par rapport à l'axe longitudinal (4), par un fond (6) et un couvercle (7), qui est transporté dans le trafic routier en position couchée par un véhicule de transport (15), son axe longitudinal (4) étant orienté sensiblement horizontalement et qui présente, dans la zone du fond (6), des béquilles (8) permettant de le mettre debout, avec son axe longitudinal (4) orienté sensiblement verticalement, sur des chantiers de construction ou en des endroits similaires, **caractérisé en ce qu'**un pied d'appui (9), pouvant être déployé de manière sensiblement perpendiculaire à l'axe longitudinal (4) au-delà du contour extérieur de la paroi périphérique (5), est prévu sur chaque béquille (8).

2. Réservoir de stockage selon la revendication 1,
**caractérisé en ce qu'**un total de quatre béquilles (8) sont munies chacune d'un pied d'appui (9), deux béquilles (8) se trouvant de préférence chaque fois par paires dans un plan (E), et les pieds d'appui (9) de chaque paire pouvant être déployés dans la direction de ce plan (E).

3. Réservoir de stockage selon l'une des revendications 1 ou 2, **caractérisé en ce que** des tubes de guidage (10) sont prévus dans la zone des béquilles (8), disposés perpendiculairement à l'axe longitudinal (4), dans lesquels sont guidés de manière mobile linéairement des bras (11) auxquels sont fixés les pieds d'appui (9).

4. Réservoir de stockage selon l'une des revendications 1 à 3, **caractérisé en ce que** des vérins hydrauliques (12) servant à déployer les pieds d'appui (9) sont prévus dans la zone des béquilles (8) et **en ce qu'**un dispositif de raccordement hydraulique (13) est prévu pour le raccordement des vérins hydrauliques (12) à un groupe hydraulique (14) du véhicule de transport (15).

5. Réservoir de stockage selon l'une des revendications 1 à 4, **caractérisé en ce qu'**un organe de prélèvement (16) est prévu dans la zone du fond (6), qu'un organe de déchargement (17) est prévu dans la zone du couvercle (7), et qu'un dispositif de transport (18) de la matière de remplissage (2) est prévu entre les organes de prélèvement et de déchargement (16, 17), le dispositif de transport (18) s'étendant à l'intérieur de la paroi périphérique (5), le dispositif de transport (18) étant de préférence une vis sans fin (19).

6. Réservoir de stockage selon l'une des revendications 1 à 5, **caractérisé en ce que** l'espace de stockage (3) est divisé en espaces partiels (20).

7. Réservoir de stockage selon l'une des revendications 1 à 6, **caractérisé en ce que** le volume de l'espace de stockage (3) est d'environ 60 m³.

8. Réservoir de stockage selon l'une des revendications 1 à 7, **caractérisé en ce que** des moyens de fixation (23) sont prévus sur le réservoir de stockage (1) pour la fixation positive et amovible sur le véhicule de transport (15), dont la direction de démontage (24) est sensiblement parallèle à l'axe longitudinal (4) du réservoir de stockage (1), les moyens de fixation (23) étant de préférence une pluralité d'oeillets de fixation (25) fixés sur le réservoir et recevant des doigts de fixation (26) fixés sur le véhicule.

9. Véhicule de transport pour le transport et l'érection d'un réservoir de stockage mobile (1) selon l'une des revendications 1 à 8, avec un châssis basculant (27) recevant le réservoir de stockage (1), le châssis basculant (27) pouvant être basculé autour d'un axe de basculement horizontal (28) d'une position de transport pour le transport du réservoir de stockage (1) dans laquelle l'axe longitudinal (4) est dans une position sensiblement horizontale, dans une position d'érection pour l'érection du réservoir de stockage (1), dans laquelle l'axe longitudinal (4) est dans une position sensiblement verticale, **caractérisé en ce que** des dispositifs de positionnement (29) sont prévus sur le véhicule de transport (15) pour le transport et la dépose de fondations préfabriquées (22) pour le réservoir de stockage (1), les dispositifs de positionnement (29) étant disposés de part et d'autre du véhicule de transport (15) et pouvant être déployés latéralement par rapport au véhicule de transport (15).

10. Véhicule de transport selon la revendication 9,
**caractérisé en ce que** les dispositifs de positionnement (29) comprennent des bras en porte à faux (30) basculants ou mobiles linéairement à l'aide d'un dispositif du type télescopique dans la direction latérale par rapport à la direction longitudinale du véhicule de transport (15).

11. Véhicule de transport selon l'une des revendications 9 ou 10, **caractérisé en ce que** les dispositifs de positionnement (29) comprennent des vérins hydrauliques (31) orientés de manière sensiblement verticale pour la dépose et la reprise des fondations préfabriquées (22), les vérins hydrauliques (31) étant prévus aux extrémités extérieures (32) des bras en porte à faux (30).

12. Véhicule de transport selon l'une des revendications 9 à 11, **caractérisé en ce que** le véhicule de transport (15) est muni d'un dispositif de raccordement hydraulique (33) pour le raccordement et l'alimentation des vérins hydrauliques (12) montés sur le réservoir.

13. Véhicule de transport selon l'une des revendications 9 à 12, **caractérisé en ce que** des béquilles (34) mobiles hydrauliquement sont prévues dans la zone de l'axe de basculement (28).

14. Véhicule de transport selon l'une des revendications 9 à 13, **caractérisé en ce que** des moyens de fixation (35) pour la fixation positive et amovible du réservoir de stockage (1) sont prévus sur le châssis basculant (27), formés de préférence par des doigts de fixation (26) pénétrant dans des oeillets de fixation (25) fixés sur le réservoir, et présentant des dispositifs de sécurité (36) commandés hydrauliquement.

15. Véhicule de transport selon l'une des revendications 9 à 14, **caractérisé en ce que** le châssis basculant (27) peut être abaissé, le véhicule de transport (15) étant de préférence muni d'un amortissement pneumatique (37) et la zone arrière du véhicule de transport pouvant s'abaisser par le biais de l'amortissement pneumatique (37).

16. Procédé d'érection d'un réservoir de stockage mobile (1) selon l'une des revendications 1 à 8 à l'aide d'un véhicule de transport (15) selon l'une des revendications 9 à 15 comprenant les opérations suivantes :
- le véhicule de transport (15) va à un lieu d'implantation (40), les fondations préfabriquées (22) étant tenues par les dispositifs de positionnement (29) ;
- les fondations préfabriquées (22) sont déployées latéralement hors du contour du véhicule de transport (15) ;
- les fondations préfabriquées (22) sont déposées au lieu d'implantation (40) ;
- le véhicule de transport (15) est déplacé de sorte que les béquilles (8) du réservoir de stockage (1) soient positionnées dans la zone au-dessus des fondations préfabriquées (22) ;
- le réservoir de stockage (1) est basculé d'une position sensiblement horizontale de son axe longitudinal (4) dans une position sensiblement verticale de son axe longitudinal (4) à l'aide du châssis basculant (27) qui tient le réservoir de stockage (1) ;
- les pieds d'appui (9) prévus sur les béquilles (8) sont amenés à une position définie par les fondations préfabriquées (22), dans une direction augmentant la distance par rapport à l'axe longitudinal (4) du réservoir de stockage (1), au-delà du contour de la paroi périphérique (5) ;
- le réservoir de stockage (1) est déposé par les pieds d'appui (9) sur les fondations préfabriquées (22) ;
- le réservoir de stockage (1) est libéré par le châssis basculant (27), sur lequel il était fixé ;
- le véhicule de transport (15) quitte le lieu d'implantation (40).

17. Procédé selon la revendication 16, **caractérisé en ce que** la libération du réservoir de stockage (1) par le châssis basculant (27) sur lequel il est fixé est réalisé par l'abaissement du châssis basculant (27) à l'aide de l'amortissement pneumatique prévu sur le véhicule de transport (15).
